# EUROPEAN PATENT SPECIFICATION

(11) **EP 0 227 052 B1**
(45) Date of publication and mention of the grant of the patent: **20.04.1994**
(21) Application number: 86117673.3
(22) Date of filing: 25.02.1983
(51) Int. Cl.: G05D 13/62, G11B 15/473, H04N 5/76

(54) **Servo control apparatus**
Servo-Regelvorrichtung
Dispositif de servocommande

(30) Priority: 02.04.1982 US 364963
(43) Date of publication of application: 01.07.1987
(62) Divisional of application: 83301020.0
(73) Proprietor: AMPEX SYSTEMS CORPORATION, Redwood City, California 94063-3199 (US)
(72) Inventor: Louth, Kenneth, Los Altos California (US)
(74) Representative: Horton, Andrew Robert Grant

(56) References cited:
- FR-A- 2 128 854
- GB-A- 2 012 999
- US-A- 4 206 485
- US-A- 4 212 039
- US-A- 4 271 382
- IEEE TRANSACTIONS ON MAGNETICS, vol. MAG-17, no. 4, July 1981, pages 1435-1437,IEEE, New York, US; R.W. VAN PELT: "Microprocessor controlled tape motion"
- IEEE TRANSACTIONS ON CONSUMER ELECTRONICS, vol. CE-26, no. 1, February 1980,pages 121-128, IEEE, New York, US; N. AZUMA et al.: "Microprocessor controlledvariable play-back speed system for video tape recorder"

## Description

The present invention generally relates to servo systems for rotating mechanisms and, more particularly, to a microprocessor controlled scanner servo system for a magnetic tape recording and reproducing apparatus.

It is readily appreciated that video recording and reproducing apparatus, particularly apparatus that records and reproduces video information of broadcast quality, is highly technical and complex equipment that requires sophisticated electronic as well as mechanical components and systems. For broadcast quality recording and reproducing apparatus, particularly video tape recording and reproducing apparatus, the level of technical sophistication is extraordinary in terms of the amount of control that is required to reliably operate the apparatus at broadcast quality standards. Such videotape recording apparatus has a number of servo systems which control its operation, including a servo system for controlling the rotation of the scanning drum carrying the recording and reproducing transducers or heads, the servo system which controls the reel drive motors which drive the supply and take-up reels and the capstan servo system which controls the speed with which the tape is driven during recording and reproducing.

Accordingly, it is a preferred object of the present invention to provide an improved scanner servo for a recording and/or reproducing apparatus which has extraordinary accuracy due to the fact that its resolving power is essentially that of the microprocessor itself, however the invention has utility in controlling other rotary mechanisms by means of a microprocessor.

The state of the art is illustrated by GB-A-2012999, which describes a servo system for a capstan motor of a video tape recorder and discloses features corresponding to those in the precharacterising portion of claim 1.

According to one aspect as claimed in claim 1, the invention provides apparatus for the servo control of a rotating mechanism, comprising a velocity closed servo loop; a phase closed servo loop; means for summing first and second error signals from the loops and applying the summed signals to drive means for the rotating mechanism, a first counting means for providing a digital count signal indicative of the actual rotational velocity of the rotating mechanism; and a second counting means for providing a digital count signal indicative of the actual rotational phase position of said rotating mechanism; characterised by a microprocessor arranged for determining the counts of said first and second counting means, comparing the determined count of said first counting means with a predetermined count to generate the first error signal, and comparing the determined count of said second counting means with a predetermined count to generate the second error signal, whereby by virtue of the high resolution resolving capability of the microprocessor the velocity closed servo loop performs the major portion of the servo control and the phase closed servo loop essentially operates as a phase positioning loop.

The apparatus may comprise digital-to-analog converters for receiving the error signals and for converting them to analog output signals and amplifiers for amplifying the error signals before they are summed.

The second counting means is preferably programmable so as to provide a preselected count, said microprocessor being adapted to change the count therein to thereby alter the phase position of said rotating mechanism.

According to another aspect as claimed in claim 5, the invention provides apparatus for the servo control of a rotating scanner for a recording and/or reproducing apparatus, including a velocity closed servo loop and a phase closed servo loop, wherein both servo loops respond to tachometer pulses each indicating a particular phase position of the scanner and both servo loops are under the control of the same microprocessor which determines the counts of a first and a second counting means, which provide digital count signals indicative of the actual rotational velocity of the scanner and the actual rotational position of the scanner respectively, and compares the determined counts with respective predetermined counts to generate a velocity error signal and a phase error signal respectively and, by virtue of its high resolution resolving capability, enables the velocity closed servo loop to perform the major portion of the servo control so that the phase closed servo loop essentially operates as a phase positioning loop.

The apparatus preferably includes means for summing the error signals to provide a drive signal for a motor which drives the scanner.

### DESCRIPTION OF THE DRAWINGS

Figure 1 is a functional block diagram illustrating the functional interaction of the microprocessor with the various servo systems of the apparatus, and of the microprocessor and other important circuitry;
Figure 2 is another functional block diagram of the microprocessor and illustrates the manner in which it receives input information relating to the operation of the apparatus and provides output signals that are used to control the operation of the apparatus;
Figures 3a and 3b are very broad flow charts illustrating the software functional operation of the microprocessor;
Figure 4 is a functional block diagram of the scanner servo system;
Figures 5a and 5b together comprise a detailed electrical schematic diagram illustrating the microprocessor together with machine control interfacing circuitry and multiplexing analog-to-digital converting circuitry; and
Figure 6 is a detailed electrical schematic diagram illustrating the scanner servo circuitry of the apparatus of the present invention, which detailed circuitry carries out the operation of the block diagram of Figure 4.

### DESCRIPTION OF THE APPARATUS

Broadly stated, the scanner servo system of the present invention is controlled by a microprocessor which also controls the other major servos of a tape recording and reproducing apparatus, the other servos of which include: 1) a capstan servo which controls the movement of the tape during recording and during most, but not all, reproducing operations; 2) the automatic scan tracking servo which controls transverse movement of the reproduced heads relative to the longitudinal direction of the track to have the head accurately follow a track during reproducing and particularly during special motion reproducing wherein the tape is being transported at a speed other than normal playback speed; 3) the reel servos which control the tensioning of the tape during recording and reproducing operations and the movement of the tape during shuttle operation; and, 4) the scanning drum servo of the present invention which rotates the recording and reproducing heads at the proper speed during such respective operations. The microprocessor receives digital information as well as digitally converted analog information from various locations throughout the circuitry and apparatus, processes such information and thereafter provides digital output signals to other circuitry, some signals of which are converted into the analog domain for controlling the various operations that are performed by the apparatus in its various modes. The nature of the operation of the other servos and the circuitry that carries out the operations thereof will not be specifically described herein, but such servos are comprehensively described in European Patent Application No. 83301016.8 entitled "Microprocessor Controlled Multiple Servo System for a Recording and/or Reproducing Apparatus", filed on 25th February 1983 (published as No. 0091188).

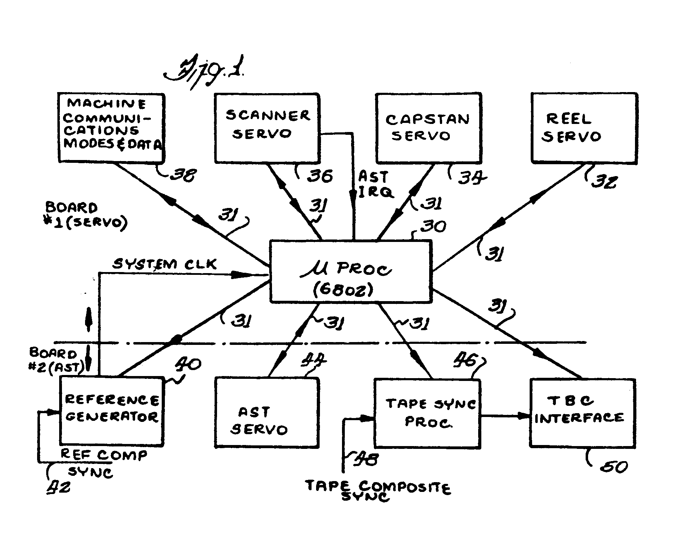

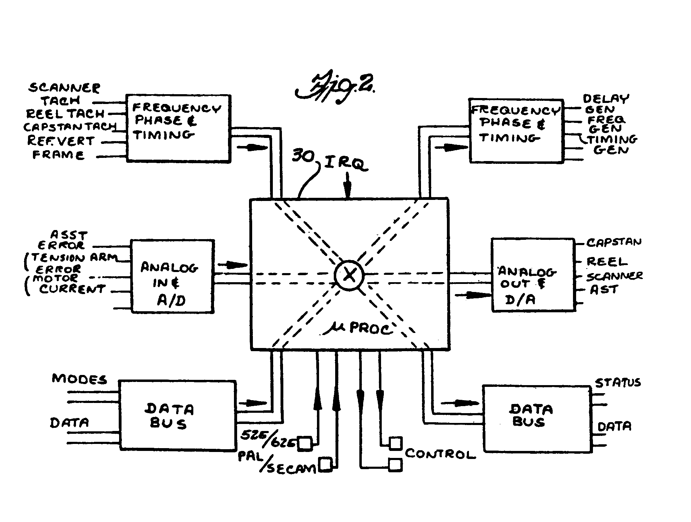

In Figure 1 is shown a microprocessor 30 which is interconnected by a data bus 31 with a reel servo 32, a capstan servo 34, a scanner servo 36 and a machine communication interface 38 which essentially controls the various modes of the recording and reproducing apparatus as commanded either by an operator or from a remote location. The microprocessor also interacts with a reference generator 40 which receives a reference station composite sync signal via line 42. The reference generator generates a system clock which clocks the microprocessor, which in turn synchronizes all of the clock timing of the servos and other circuitry. The microprocessor also interacts with the automatic scan tracking servo 44 and a tape sync processor 46 which has a tape composite sync signal input via line 48. The tape sync processor additionally provides a signal to the time base corrector interface 50 which provides appropriate timing and control signals for use by the time base corrector to provide a broadcast quality video image having the requisite stability and vertical position with respect to system reference as well as the correct chroma information, which processing varies depending upon what reproducing mode the apparatus is being operated.

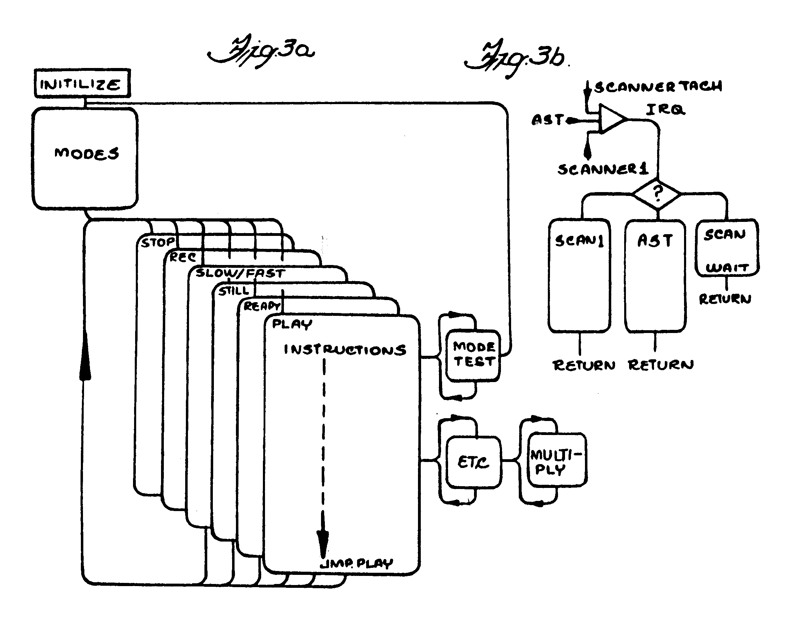

While the functional block diagrams shown in Figure 1 illustrate the interaction of the microprocessor with the various servo systems of the apparatus, with machine control and with the time base corrector and the like, the system can also be functionally described in terms of input and output signals that are provided to and from the microprocessor and this functional block diagram is shown in Figure 2. The microprocessor 30 receives frequency, phase and timing data shown by the upper left functional block including such input signals as scanner tach pulses, reel tach pulses, capstan tach pulses, reference vertical and frame timing signals, which is converted into digital information for processing by the microprocessor. The microprocessor also receives analog information shown by the block left of the microprocessor which is converted into digital information for processing by the microprocessor and such analog input signals include the automatic scan tracking error signals, the tension arm error signals and various motor currents from the reel drive motors, the capstan drive motor and the scanner drive motor. The data bus also receives operating mode information as well as other machine control data and it processes this information and provides status information and other data. The microprocessor generates digital information which is converted to analog information and these analog output signals include control signals for the capstan servo, the reel servo, the scanner servo and the automatic scan tracking servo. Similarly, the microprocessor provides frequency, phase and timing output information which include delay signals, phase and timing output information that are used by the various servos and other circuits.

The microprocessor controlled system of the present embodiment is adaptable for recording and reproducing video signals from any standard worldwide format, i.e., it can record and reproduce a NTSC signal having 525 lines or a PAL or SECAM signal having 625 vertical lines. The input control line can be set to operate either as a 525 or 625 line system and the various constants and other software values which control the servos and other circuitry of the apparatus will be selected for proper operation. Similarly, another control line can be set for either a PAL or SECAM format system once a 625 line system is specified. The software in memory includes instructions and numerical constants that will permit the apparatus to properly operate regardless of the television signal format that is being used.

The microprocessor controlled servo system described herein is adapted to control the reel servo system and the scanner servo system during the high speed shuttle mode in a way so as to protect the recording and reproducing heads, while the tape is being wound off one of the reels onto the other. In the past, as the tape was nearing the end so as to be wound on a single reel duing high speed shuttle, the potential for chipping the ceramic recording and reproducing heads was quite high. In the apparatus described herein, during high speed shuttle, reel tape pack diameter information that is determined by the microprocessor is used to control the reel servo and the scanning drum servo to perform a sequence of events which substantially reduce the possibility of heads being chipped. When the microprocessor determines that the tape has almost reached the end of being wound off one reel, it controls the reel servo to stop the tape and it also reverses scanner motor current to brake the scanner. After the tape has been stopped, the reel servo moves the tape at a relatively slow rate, e.g., twice normal recording speed, and the scanning drum is allowed to coast while the tape is wound entirely off one reel onto the other.

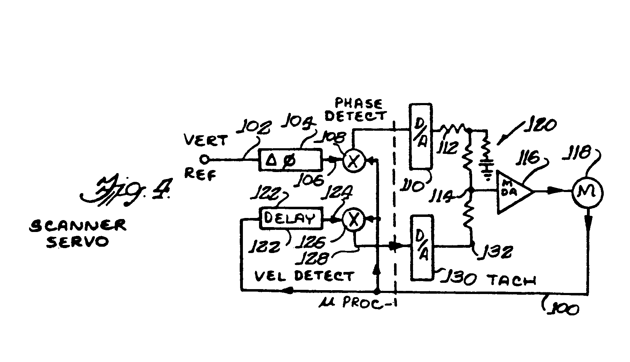

The apparatus is programmed to operate in various operating modes as is shown in the broad flow chart of Figure 3a. The flow chart representing microprocessor software shows that once the machine is initialized, a mode is selected and these modes include stop, record, slow and fast motion reproduce, stop motion or still frame reproduce, ready and normal play. Once the apparatus is placed in an operating mode, then it undergoes a mode test to determine if it is a valid mode and if such is the case, it will return to that mode and begin running the program that controls the apparatus in that mode. If the mode test is invalid, then it will return to the stop mode and the apparatus will stop. After the apparatus is placed in a mode, it will continue in that mode until some event occurs, such as a mode change or a completion of some operation. Included as part of each operating mode are various subroutines which are called as shown in Figure 3a. Certain ones of these subroutines are used in various ones of the operating modes. For example, the play mode will contain a block of code instructions that will call up various subroutines in the specified order. As long as the apparatus is operating in the play mode it will repetitively go through this block of code instructions. When the scanner tachometer pulse occurs, it will cause an interrupt to the microprocessor as shown in Figure 3b.

The microprocessor operates on an interrupt basis, with an interrupt resulting from one of three inputs. The software determines which input caused the interrupt and the microprocessor then enters the appropriate block of code which runs through various subroutines until it reaches the end and then returns to the instruction that had previously been completed prior to the interrupt. The scanner tachometer pulse originally triggered a counter which has a count that exceeds the maximum time required to store all current relevant information in stack registers in the microprocessor. When this is done, it is ready to immediately perform the instructions in the "scanner 1 " block of code. This is carried out by the scanner interrupt block of code which causes the microprocessor to store the information and then literally wait for the "scanner 1 " interrupt. After the "scanner 1 " block of code is run, the microprocessor removes the information from the stack registers and resumes running through the instructions specified by the operating mode.

Complete software for operating the microprocessor for controlling all of the servos and other operations shown in the block diagrams of Figures 1, 2 3a and 3b is described in the aforementioned European Patent Application No.83301016.8.

### BROAD SCANNING DRUM SERVO DESCRIPTION

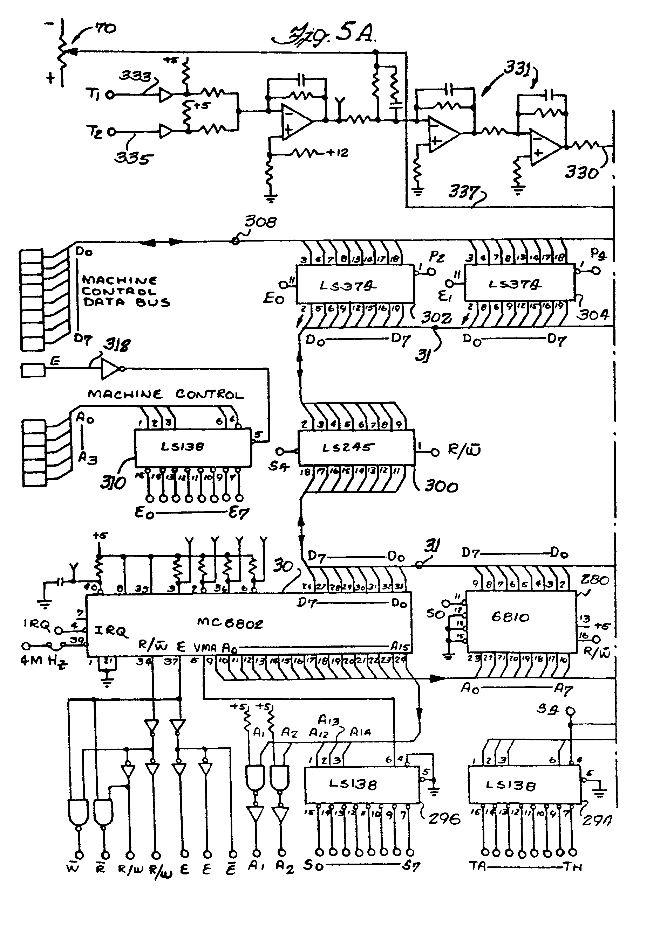

The scanning drum servo is controlled by the microprocessor 30 as shown by the functional block diagram of Figure 4. The block diagram shows that the majority of the functions are performed within the microprocessor 30 and output signals are produced for application to circuitry external to the microprocessor.

The scanner servo comprises two loops, i.e., a phase loop and a velocity loop. A scanner tachometer input is applied to each of the loops via a line 100. The phase adjustment loop has a vertical reference signal applied via input line 102 to a phase adjustment delay generator 104 which has output line 106 providing one input to a phase detector 108 which is in essence a comparator that measures the phase difference between the reference signal and the tachometer signal. The difference represents an error signal that is applied to a digital-to-analog converter 110 which provides an analog output signal on output line 112 that is summed into a junction 114 to a motor drive amplifier 116 for controlling a scanner drive motor 118. A capacitor resistor lead/lag phase error circuit 120 is provided to compensate the phase loop of the scanner servo.

The other loop is a standard velocity loop that receives the tachometer signals from line 100 and applies them to a delay circuit 122 which provides on line 124 a delayed scanner tachometer signal that is applied to one input of a second comparator 126. The other input of the comparator 126 receives undelayed tachometer signal information. An output 128 of the comparator 126 provides an error signal that is also converted by a digital-to-analog converter 130 to an analog signal that is output on line 132 and summed at junction 114 at the input of the motor drive amplifier 116. The scanner servo is much more accurate than many prior art devices because the delays are very accurate. This is due to the fact that the delays are computed to a very high resolution by the microprocessor. In this regard, for a 625 PAL or SECAM system having a field rate of 50Hz, an internal microprocessor timer having a period of 1 microsecond can compute a delay accurate to one part in 20,000. This permits the gain bandwidth product of the velocity loop to be increased quite significantly to obtain better and more accurate control. It also enables the velocity loop to perform the majority of the error correction and the phase loop merely provides the proper positioning of the scanner, i.e., it is merely a positioning loop. The counting function and error determining portions of both of the loops are performed by the microprocessor and the only portion of the functional block diagram that is performed outside of the microprocessor is from the digital-to-analog converter through the motor drive amplifier.

### THE MICROPROCESSOR CIRCUITRY

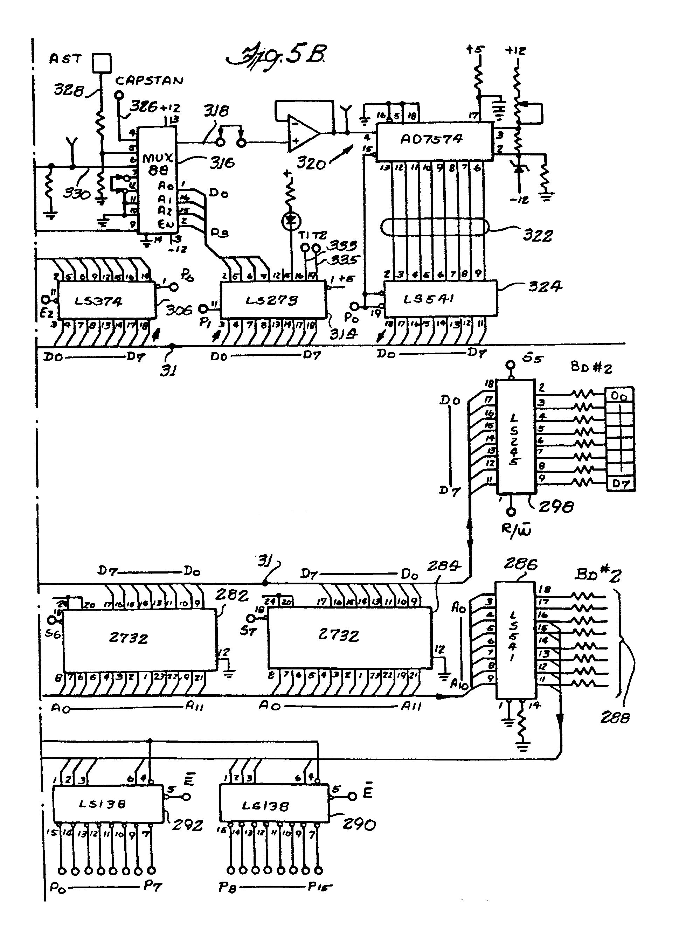

Before describing the detailed electrical circuit schematic diagrams of the various servos that have been previously described with respect to functional block diagrams, the schematic diagrams which contain the microprocessor 30 itself will be briefly described in connection with Figures 5a and 5b which together comprise a single schematic. As previously mentioned, and as has been shown by the block diagram of Figure 1, the bulk of the circuitry of the apparatus described herein is contained on only two printed circuit boards and one of said printed circuit boards contains the microprocessor itself. The layout of the circuitry is such that address control of bidirectional buffers enable the data bus from the microprocessor to be connected to either the first or the second printed circuit board. As shown in Figure 5a, the microprocessor 30, which is a Motorola integrated circuit Model MC 6802 has 16 address lines which address circuit components as well as specific addresses of memory circuits. As shown on the lower portion of the microprocessor 30 in Figure 5a, address lines Ao to A₁₅ extend rightwardly to a random access memory 280 which is controlled by address lines Aₒ through A₇, as well as respective programmable read only memories 282 and 284 (Figure 5b) which are controlled by address lines Aₒ to A11. The address lines also extend to a buffer 286 which has output lines 288 which extend to the address lines of the second printed circuit board. The lines 288 also extend to respective decoder integrated circuits 290 and 292 which are used to select ports Po to P₁₅. The address lines also extend to yet another decoder 294 which provides selection of various programmable timer integrated circuits T_{A} to T_{H}.

Decoders 290, 292 and 294 are enabled when a master decode enable line S₄ is active and this is provided by a master decode circuit 296 located to the left of the decoder 294. As is clearly illustrated, address lines Ai2, A₁₃ and A14 from the microprocessor 30 control the address selection master decode enable output lines (So to S₇) that activate various portions of the circuitry. For example, when active, the decoded output line So enables the random access memory 280, decode output S₆ enables the memory 282 and decode output S₇ similarly enables memory 284. The data bus 31 from the microprocessor comprises eight output lines (Do to D₇) extending to the memories 280, 282, 284 as well as to bidirectional buffers 298 and 300. Buffer 290 has output lines that extend the data bus to the second printed circuit board, and it is activated by the decode output Sₛ. Activation of the decode output S₄ enables the decoders 290, 292 and 294 as well as the other bidirectional buffer 300 which effectively extends the data bus to the remaining circuitry shown in the upper portion of Figures 5a and 5b and to remaining circuitry on the first board.

The data bus 31 has input latches 302 and 304 and an output latch 306 (Figure 5b). The data lines 308 are also connected to these latches and the lines 308 represent a data bus to the machine control system which has a separate microprocessor controlled system for carrying out other machine control functions of the apparatus independently of the system controlled by microprocessor 30. The interaction of operator control and mode switches, diagnostics and the like with the servo system of the present invention is carried out through this data bus via the latches 302, 304 and 306. These latches are respectively enabled by enable lines Eₒ, E₁ and E₂ which are decoded outputs of a decoder circuit 310 that has operator activated address lines Aₒ to A3 from the machine control system. The decode circuit 310 is enabled by a line 312 from the machine control system. By selectively enabling decode output lines Eo, E₁ and E₂, data can be input into the latches 302 and 304 for communication onto the data bus of the microprocessor 30 and enabling the latch 306 permits data from the microprocessor 30 to be latched therein for communication to the machine control system via lines 308.

The remaining portion of the circuitry shown in the upper portion of Figures 5a and 5b concern the analog information input that is provided to the microprocessor 30. When port P₁ from decoder 292 is active, a latch 314 that is connected to the data bus can receive a data word which decodes an address for controlling a multiplexing switch 316. The switch 316 selects one of the left inputs thereof for application onto line 318 that extends to an analog-to-digital converter, indicated generally at 320, having output lines 322 which extend to a latch 324 which applies data onto the data bus for use by the microprocessor when a port line Pₒ is enabled from the address decoder 292.

The multiplexing switch 316 can select a capstan servo control track error signal applied via line 326, an automatic scan tracking movable element position error signal applied via line 328 or a signal that is indicative of the position of the tension arm 70 applied via line 330. The circuitry at the upper portion of Figure 5a provides an analog signal on line 330 that represents the position of the previously described arm through appropriate loop compensation circuitry indicated generally at 331. The arm positional reference for forward and reverse arm locations during shuttle and still frame reproducing is set by coding lines 333 and 335 by means of the output latch 314 from the microprocessor. In addition, line 337 can be selected to measure the actual mechanical arm position for tape threading and unthreading.

### THE SCANNING DRUM SERVO CIRCUITRY

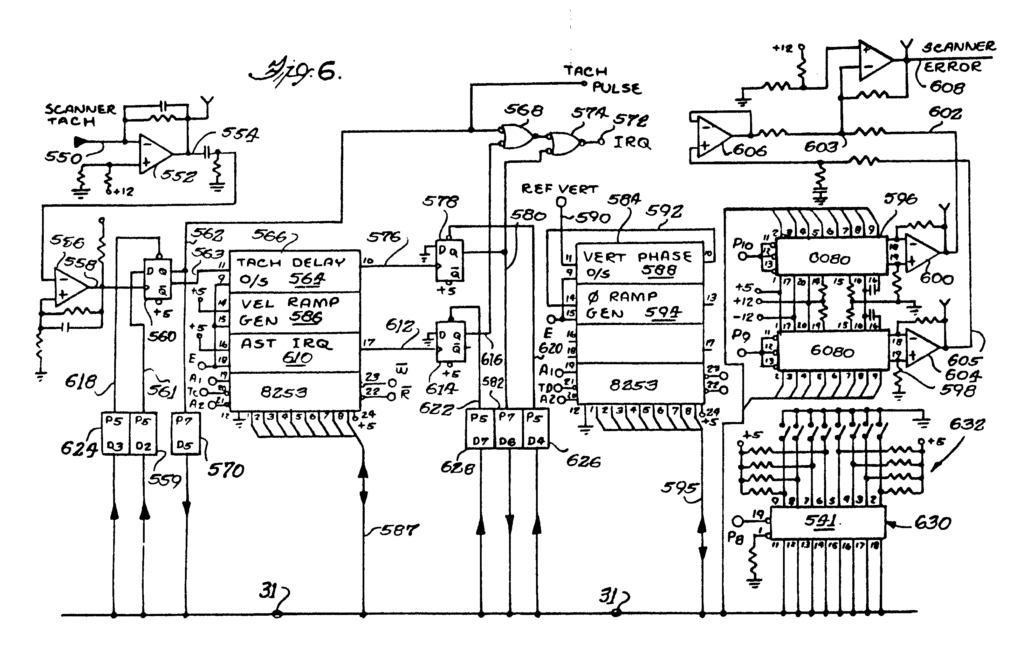

The detailed circuitry which carries out the operation of the scanning drum or scanner servo shown in the block diagram of Figure 4 is shown in Figure 6. As previously mentioned, the scanner servo is comprised of two servo loops, i.e., a velocity servo loop and a phase servo loop. Since the accuracy of the velocity servo loop is exceedingly high, the phase servo actually operates as a positioning servo loop to properly phase locate the scanner once it has been synchronised or locked by virtue of the operation of the velocity servo loop. The scanner servo circuitry is extremely powerful and versatile in the breadth of its operational capabilities, in part due to the fact that it is under microprocessor control. By virtue of this fact, the scanner phase position can be easily advanced or retarded relative to reference vertical and can be further manipulated to accommodate various time base corrector apparatus which may require varying lead times.

As shown in Figure 6, a scanner tachometer pulse synchronous with head rotation is applied to input line 550 which is connected to a low impedance input amplifier 552, the output of which appears on line 554 which is capacitively coupled to a slicer 556. The output line 558 of the slicer provides a timing pulse that is independent of the amplitude of the input signal from the scanner tachometer applied on input line 550. This timing pulse clocks a D flip-flop 560 which receives a run command from the microprocessor 30 over lines 561 via tristate latch 559. The flip-flop has its Q output 563 connectd to a tachometer delay one-shot 564 of a timer chip 566 and to a gate 568. Its Q output line 562 is connected to a tri-state buffer 570 that is connected to the data bus 31. When a scanner tachometer pulse is applied to input line 550, a low signal is produced on line 562 which sets the tri-state buffer 570 as well as provides an interrupt signal (IRQ) on line 572 via gates 574 and 568. The interrupt is applied to the microprocessor which causes it to cease its current activity and determine where the interrupt originated. By virtue of the activation of the tri-state buffer 570, the microprocessor can determine that the interrupt originated from the first scanner tachometer pulse signal.

A particularly important aspect of the circuitry of the scanner servo system involves the capability of the microprocessor to accurately determine the phase of the tachometer and this is accomplished by providing a second scanner interrupt signal to the microprocessor following the first one, the second interrupt being delayed by a predetermined time period that is slightly in excess of the maximum time required for the microprocessor to cease the present instruction and store all of the data that it is currently processing, so that the microprocessor has about 20 microseconds to complete the housekeeping activity and to be ready to immediately process the second scanner interrupt. This permits the scanner servo to effect control of the head rotation with a timing resolution within one microsecond, which is within the resolving capability of the microprocessor.

To accomplish the delay, the scanner tachometer signal on line 563 is applied to the one-shot 564 which provides after twenty microseconds a delayed scanner tachometer signal on output 576. This delayed signal clocks a D flip-flop 578, so that its Q output line 580 is provided to the gate 574 to provide a second interrupt command on line 572. At the same time it activates gate 574, the Q output also sets a tri-state buffer 582 whose output is applied to the data bus so that when the second interrupt occurs, the microprocessor can strobe the tri-state buffer 582 and indeed determine that it is the delayed scanner tachometer interrupt. Once the second interrupt is received, the microprocessor can immediately examine the values in the timer chip 566 and in a timer chip 584 and determine if any velocity and/or phase error exists. In this regard, the timer chip 566 has a velocity ramp generator 586 that is clocked by a one MHz clock from the reference generator and at the occurrence of the second scanner tachometer interrupt, the microprocessor inspects the digital value that is present in the velocity ramp generator at output lines 587 and then resets and retriggers it by means of a reset signal E.

Similarly, the timer chip 584 contains a vertical phase one-shot 588 which is triggered by reference vertical on input 590 which originates from the reference generator and this one-shot is variable in that it is under microprocessor control and its period can be advanced or retarded in accordance with instructions that are provided by the microprocessor, including the aspect previously described with respect to advancing or retarding the scanner phase. The output from the vertical phase one-shot appears on line 592 which is connected to the input of a phase ramp generator 594 that is also clocked by the one MHz clock. The digital value of the phase ramp generator at output lines 595 is similarly examined at the occurrence of the second scanner tachometer interrupt to determine if any phase error exists. The existence of the input signal on line 592 will retrigger the phase ramp generator 594 and it will continue being clocked until the second interrupt occurs. The phase ramp generator is reset by the reset signal E, as shown.

By virtue of the microprocessor obtaining the values from the velocity ramp generator 586 and the phase ramp generator 594, it then determines what, if any, phase and velocity error exists and applies an error signal through the data bus 31 to respective digital-to-analog converters 596 and 598. The digital-to-analog converter 596 has output lines which are connected to amplifier 600 which provides an output on line 602 which represents the velocity error and this is summed at the summing junction 603 with a phase error component signal that is obtained from the digital-to-analog converter 598 through lines which are connected to an amplifier 604 whose output is connected by line 605 to a second amplifier 606. The sum of the velocity and phase error appears on line 608 which extends to the motor drive amplifier which drives the scanner motor.

The timer chip 566 also includes a section 610 constituting a rate generator counter that is clocked by the one MHz clock and provides a high signal on output 612 which clocks a D flip-flop 614 which provides an interrupt signal on line 616 that extends to the gate 568 and provides an interrupt to the microprocessor. The microprocessor knows that the interrupt from the automatic scan tracking counter is an automatic scan tracking interrupt as opposed to a scanner or delayed scanner tachometer interrupt by virtue of the fact that both of the tri-state buffers 570 and 582 are inactive. After the interrupts have occurred, the microprocessor is adapted to clear the flip-flops 560, 578 and 614 via reset lines 618, 620 and 622, respectively, connected to tri-state latches 624, 626 and 628 which receive their activating signals from the microprocessor via the data bus.

As previously mentioned, the apparatus may be operatively connected to various type of time base correctors which require varying amounts of scanner phase advancement depending upon the amount of delay that is necessary for the operation of the particular time base corrector and in this regard, an input buffer 630 is provided which has eight bits of information that are effectively applied by a dip switch 632 that may be set to provide the proper amount of phase adjustment of the scanner. It is contemplated that eight bits of tachometer phase adjustment is not required so that the input buffer 630 may be effectively divided into two functions, with the rightmost four lines providing scanner phase tachometer adjustment, whereas the four leftmost lines may provide initiation of test modes. When the microprocessor strobes the buffer 630, it obtains the number therein for operating the scanner phase adjustment and uses this to vary the time of the vertical phase one-shot 588 which triggers the phase ramp generator 594. In this manner, the vertical phase can be moved appropriately for the particular time base corrector that is being used with the apparatus.

## Claims

1. Apparatus for the servo control of a rotating mechanism, comprising a velocity closed servo loop (100,122,126, 114,116); a phase closed servo loop (100,108,114,116); means (114) for summing first and second error signals from the loops and applying the summed signals to drive means (116) for the rotating mechanism, a first counting means (586) for providing a digital count signal indicative of the actual rotational velocity of the rotating mechanism; and a second counting means (594) for providing a digital count signal indicative of the actual rotational phase position of said rotating mechanism; characterised by a microprocessor (30) arranged for determining the counts of said first and second counting means, comparing the determined count of said first counting means with a predetermined count to generate the first error signal, and comparing the determined count of said second counting means with a predetermined count to generate the second error signal, whereby by virtue of the high resolution resolving capability of the microprocessor the velocity closed servo loop performs the major portion of the servo control and the phase closed servo loop essentially operates as a phase positioning loop.

2. Apparatus according to claim 1, further comprising digital-to-analog converters (596, 598) for receiving the error signals and for converting them to analog output signals and amplifiers (600, 604) for amplifying the error signals before they are summed.

3. Apparatus according to claim 1 or 2 wherein the second counting means is programmable so as to provide a preselected count, said microprocessor being adapted to change the count therein to thereby alter the phase position of said rotating mechanism.

4. Apparatus according to claim 3 including a digital switch means (632) having presettable binary positions for providing a unique digital word that can be ready by said processing means for setting the count value of said second counting means.

5. Apparatus for the servo control of a rotating scanner for a recording and/or reproducing apparatus, including a velocity closed servo loop (100,122,126,114,116) and a phase closed servo loop (100,108,114,116), wherein both servo loops respond to tachometer pulses each indicating a particular phase position of the scanner and both servo loops are under the control of the same microprocessor (30) which determines the counts of a first and a second counting means (586,594), which provide digital count signals indicative of the actual rotational velocity of the scanner and the actual rotational position of the scanner respectively, compares the determined counts with respective predetermined counts to generate a velocity error signal and a phase error signal respectively and, by virtue of its high resolution resolving capability, enables the velocity closed servo loop to perform the major portion of the servo control so that the phase closed servo loop essentially operates as a phase positioning loop.

6. Apparatus according to claim 5 and comprising means (114) for summing the error signals to provide a drive signal for a motor (118) which drives the scanner.

## Patentansprüche

1. Anordnung zur Servoregelung eines rotierenden Mechanismus mit einer Geschwindigkeitsservorregelschleife (100, 122, 126, 114, 116); einer Phasenservoregelschleife (100, 108, 114, 116); Mitteln (114) zur Summierung eines ersten und zweiten Fehlersignals von den Schleifen und Einspeisung der summierten Signale in Treibermittel (116) für den rotierenden Mechanismus, ersten Zählermitteln (586) zur Erzeugung eines digitalen ein Maß für die tatsächliche Drehgeschwindigkeit des rotierenden Mechanismus darstellenden Zählsignals; und zweiten Zählmitteln (594) zur Erzeugung eines digitalen ein Maß für die tatsächliche Drehphasenstellung des rotierenden Mechanismus darstellenden Zählsignals; gekennzeichnet durch einen Mikroprozessor (30) zur Festlegung der Zählungen der ersten und zweiten Zählermittel, zum Vergleich der festgelegten Zählung der ersten Zählermittel mit einer vorgegebenen Zählung zwecks Erzeugung des ersten Fehlersignals und zum Vergleich der festgelegten Zählung der zweiten Zählermittel mit einer vorgegebenen Zählung zwecks Erzeugung des zweiten Fehlersignals, wodurch aufgrund des hohen Auflösungsvermögens des Mikroprozessors die Geschwindigkeitsservoregelschleife den Hauptteil der Servoregelung durchführt und die Phasenservoregelschleife im wesentlichen als Phaseneinstellschleife arbeitet.

2. Anordnung nach Anspruch 1, weiterhin umfassend Digital-Analog-Umsetzer (596, 598) zur Aufnahme der Fehlersignale und deren Umsetzung in analoge Ausgangssignale sowie Verstärker (600, 604) zur Verstärkung der Fehlersignale vor deren Summierung.

3. Anordnung nach Anspruch 1 oder 2, in der die zweiten Zählermittel programmierbar sind, so daß sie eine vorgewählte Zählung liefern, und der Mikroprozessor zur Änderung der Zählung in diesen dient, um dadurch die Phasenstellung des rotierenden Mechanismus zu ändern.

4. Anordnung nach Anspruch 3 enthaltend digitale Schaltermittel (632) mit vorsetzbaren Binärstellungen zur Erzeugung eines eindeutigen Digitalwortes, das zum Setzen des Zählwertes der zweiten Zählmittel durch die Prozessormittel lesbar ist.

5. Anordnung zur Servoregelung eines rotierenden Abtasters für ein Aufzeichnungs- und/oder Wiedergabegerät mit einer Geschwindigkeitsservoregelschleife (100 122, 126, 114, 116) und einer Phasenservoregelschleife (100, 108, 114, 116), wobei beide Servoschleifen auf jeweils eine spezielle Phasenstellung des Abtasters anzeigende Tachometerimpulse ansprechen und beide Servoschleifen von einem Mikroprozessor (30) gesteuert werden, der die Zählungen erster und zweiter Zählermittel (586, 594) festlegt, ein Maß für die tatsächliche Drehgeschwindigkeit des Abtasters bzw. die tatsächliche Drehstellung des Abtasters darstellende digitale Zählsignale liefert, die festgelegten Zählungen zur Erzeugung eines Geschwindigkeitsfehlersignals bzw. eines Phasenfehlersignals mit entsprechenden vorgegebenen Zählwerten vergleicht und aufgrund seines hohen Auflösungsvermögens die Durchführung des Hauptteils der Regelung durch die Geschwindigkeitsservorregelschleife ermöglicht, so daß die Phasenservoregelschleife im wesentlichen als Phaseneinstellschleife arbeitet.

6. Anordnung nach Anspruch 5 umfassend Mittel (114) zur Summierung der Fehlersignale zwecks Erzeugung eines Treibersignals für einen den Abtaster antreibenden Motor (118).

## Revendications

1. Dispositif d'asservissement d'un mécanisme tournant, comprenant une boucle fermée d'asservissement de vitesse (100, 122, 126, 114, 116) ; une boucle fermée d'asservissement de phase (100, 108, 114, 116) ; un moyen (114) pour additionner des premier et second signaux d'erreur provenant des boucles et pour appliquer les signaux additionnés à un moyen d'attaque (116) du mécanisme tournant, un premier moyen de comptage (586) pour fournir un signal numérique de comptage indiquant la vitesse de rotation réelle du mécanisme tournant ; et un second moyen de comptage (594) pour fournir un signal numérique de comptage indiquant la position de phase en rotation réelle dudit mécanisme tournant ; caractérisé par un microprocesseur (30) agencé pour déterminer les comptes desdits premier et second moyens de comptage, pour comparer le compte déterminé dudit premier moyen de comptage à un compte prédéterminé pour produire le premier signal d'erreur, et pour comparer le compte déterminé dudit second moyen de comptage à un compte prédéterminé pour produire le second signal d'erreur, ce par quoi, grâce au pouvoir séparateur à haute définition du microprocesseur, la boucle fermée d'asservissement de vitesse exécute la majeure partie de l'asservissement et la boucle fermée d'asservissement de phase fonctionne essentiellement comme une boucle de positionnement de phase.

2. Dispositif selon la revendication 1, comprenant en outre des convertisseurs de numérique en analogique (596, 598) pour recevoir des signaux d'erreur et pour les convertir en des signaux analogiques de sortie, et des amplificateurs (600, 604) pour amplifier les signaux d'erreur avant qu'ils ne soient additionnés.

3. Dispositif selon la revendication 1 ou 2, dans lequel le second moyen de comptage est programmable de manière à fournir un compte présélectionné, ledit microprocesseur étant conçu pour changer le compte qui y est contenu pour modifier ainsi la position de phase dudit mécanisme tournant.

4. Dispositif selon la revendication 3, comprenant un moyen commutateur numérique (632) ayant des positions binaires préréglables pour fournir un mot numérique unique qui peut être lu par ledit moyen de traitement pour régler la valeur de comptage dudit second moyen de comptage.

5. Dispositif d'asservissement d'un lecteur tournant pour un appareil d'enregistrement et de reproduction, comprenant une boucle fermée d'asservissement de vitesse (100, 122, 126, 114, 116) et une boucle fermée d'asservissement de phase (100, 108, 114, 116), dans lequel les deux boucles d'asservissement réagissent à des impulsions de tachymètre indiquant chacune une position de phase particulière du lecteur et les deux boucles d'asservissement sont sous les ordres du même microprocesseur (30) qui détermine les comptes d'un premier et d'un second moyens de comptage (586, 594), qui délivrent des signaux numériques de comptage indiquant, respectivement, la vitesse de rotation réelle du lecteur et la position en rotation réelle du lecteur, qui compare les comptes déterminés avec des comptes prédéterminés respectifs pour produire, respectivement, un signal d'erreur de vitesse et un signal d'erreur de phase, et qui permet, grâce à son pouvoir séparateur à haute définition, que la boucle fermée d'asservissement de vitesse exécute la majeure partie de l'asservissement de sorte que la boucle fermée d'asservissement de phase fonctionne essentiellement comme une boucle de positionnement de phase.

6. Dispositif selon la revendication 5 et comprenant un moyen (114) pour additionner les signaux d'erreur pour fournir un signal d'attaque à un moteur (118) qui entraîne le lecteur.
